# EUROPEAN PATENT SPECIFICATION

(11) **EP 3 714 386 B1**
(45) Date of publication and mention of the grant of the patent: **24.01.2024**
(21) Application number: 18800986.4
(22) Date of filing: 20.11.2018
(51) Int. Cl.: H04L 9/32, H04L 9/40, G06F 21/10

(54) **ACCESS CONTROL FOR DIGITAL ASSETS**
ZUGANGSKONTROLLE FÜR DIGITALE GUETER
CONTRÔLE D'ACCÈS POUR ACTIFS NUMÉRIQUES

(30) Priority: 24.11.2017 EP 17203673
(43) Date of publication of application: 30.09.2020
(73) Proprietor: British Telecommunications public limited company, London E1 8EE (GB)
(72) Inventor: MONTEATH, Iain, London EC4V 5BT (GB); DANIEL, Joshua, London EC4V 5BT (GB); TATE, Jonathan, London EC4V 5BT (GB)
(74) Representative: British Telecommunications public limited company Intellectual Property Department
(86) International application number: PCT/EP2018/081891
(87) International publication number: WO 2019/101724

(56) References cited:
- EP-A1- 3 226 165
- US-A1- 2017 116 693
- US-A1- 2017 206 523

## Description

The present invention relates to access control. In particular, it relates to computer implemented access control for digital assets.

Digital assets are increasingly used in the rendering of artefacts such as a 3D-printed artefact, a rendered image, a rendered video, a textile or even an arrangement of computer software. The digital assets thus constitute valuable intellectual property and their protection from unauthorised access, unauthorised use through rendering or excessive use through repeated rendering or copying presents a considerable challenge.

Thus there is a need to protect the digital rights associated with digital assets specifying how artefacts are to be rendered by controlling access and use of such digital assets.

US patent publication US 2017/0116693 A1 purports to describe systems and methods for decentralising commerce and rights management for digital assets using a blockchain rights ledger.

The present invention accordingly provides, in a first aspect, a computer implemented method of controlling access to a digital asset specifying how an artefact is to be rendered, the method comprising: receiving the digital asset and an indication of a first transaction in a decentralised sequential transactional database; verifying the digital asset by evaluating a digital hash of the asset to compare with a hash stored in the first transaction and, responsive to the verification, securely storing the digital asset; generating a second transaction in the database to indicate the availability of the digital asset for rendering the artefact; receiving a request to access the digital asset by a requesting renderer, the request including an indication of a third transaction in the database; accessing the third transaction and responsive to a determination that the third transaction indicates that the requesting renderer is authorised to access the digital asset for rendering the artefact, securely communicating the digital asset to the requesting renderer. The method further comprises: receiving one or more criteria each defining criteria of a renderer and/or rendering of the artefact determined to meet a predetermined suitability; defining a subset of a plurality of renderers based on characteristics of the renderers and the criteria, and wherein the communication of the digital asset to the requesting renderer is further conditional on the requesting renderer belonging to the defined subset of renderers.

Preferably the database includes a blockchain data structure accessed by mining components to collectively validate a state of the blockchain.

Preferably the blockchain data structure is implemented using an Ethereum blockchain and each of the first, second and third transactions are Ethereum contracts.

Preferably the artefact is one of: a 3D-printed article; an image; a moving image such as a video; one or more sounds; a multimedia object; a surface decoration; a textile article; a foodstuff; a medicament; an arrangement of software components as an application or software service; a physical object assembled from a set of staple parts; a toy; and a particular configuration of neurons and weights between neurons in a machine learning algorithm.

Preferably the renderer renders the artefact to include, embedded therein or thereon, at least part of the indication of the third transaction to signify the authorisation of the renderer to render the artefact.

Preferably the digital asset is securely stored in a decentralised digital library.

Preferably the criteria include security characteristics of renderers.

Preferably the requesting renderer is further monitored continually for compliance with the security characteristics.

Preferably, the method further comprises: triggering each of the plurality of renderers to render the artefact based on the digital asset and collecting the characteristics of each renderer and/or rendered artefact, and wherein the subset of the plurality of renderers is defined based on the characteristics and the criteria.

Preferably the criteria include performance characteristics of renderers.

Preferably the performance characteristics include, for a renderer rendering the artefact: a volume of resource consumed by the renderer; a compliance, by the renderer, with the specification of the digital asset; a speed of rendering; a frequency of use of the renderer to render any artefacts; and a rendering capability of the renderer.

The present invention accordingly provides, in a second aspect, a computer system including a processor and memory storing computer program code for performing the steps of the methods set out above.

The present invention accordingly provides, in a third aspect, a computer program element comprising computer program code to, when loaded into a computer system and executed thereon, cause the computer to perform the steps of the methods set out above.

Embodiments of the present invention will now be described, by way of example only, with reference to the accompanying drawings, in which:
Figure 1 is a block diagram of a computer system suitable for the operation of embodiments of the present invention;
Figure 2 is a component diagram illustrating an arrangement for controlling access to a digital asset according to embodiments of the present invention; and
Figure 3 is a flow diagram illustrating a computer implemented method of controlling access to a digital asset according to embodiments of the present invention.

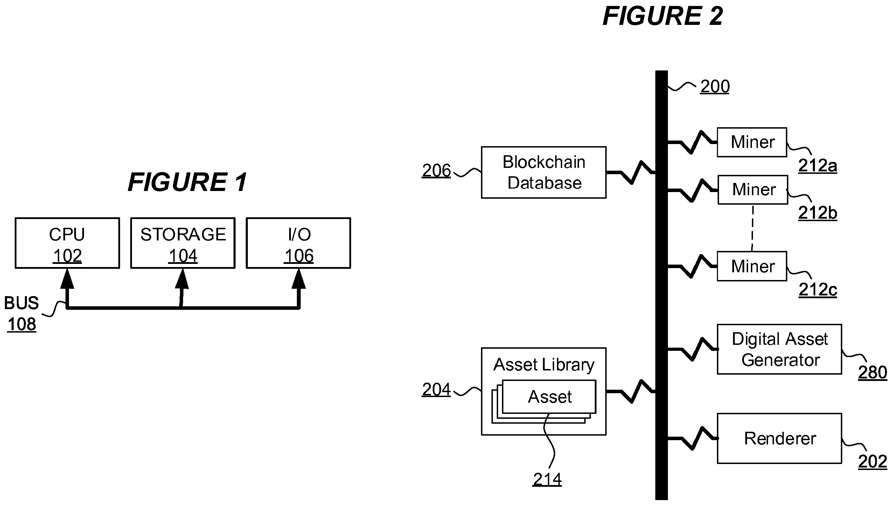

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram illustrating an arrangement for controlling access to a digital asset according to embodiments of the present invention. Components in Figure 2 are operable in communication with each other via, for example, a network 200 such as a wired or wireless computer network or a suite of interconnected or connected networks.

A digital asset generator 280 is provided as a hardware, software, firmware or combination component for generating one or more digital assets, each asset being a computer readable entity specifying how an instantiable artefact is to be rendered by an artefact renderer 202. Thus, a digital asset is a computer readable entity such as one or more digital files, signals, documents, instruction sequences, programs or other entities arranged to express a rendering specification for an artefact. Artefacts are the product of a rendering process by the renderer 202 as a hardware, software, firmware or combination component. For example, assets can include, inter alia: a 3D printed article, in which case the renderer 202 can include a 3D printer such as a device capable of one or both of additive and subtractive manufacture; an image, in which case the renderer 202 can include an image printer or display mechanism; a moving image such as a video, in which case the renderer 202 can include a computer system, appliance or other device capable of rendering video; one or more sounds such as a sound effect, music or audio track, in which case the renderer 202 can include a device being arranged to generate sound, music or audio according to the asset; a multimedia object such as a combination of two or more of text, image, video, animation, audio and other media as will be apparent to those skilled in the art, in which case the renderer 202 is a hardware, software, firmware or combination component arranged to render one or more multimedia artefacts according to the multimedia specification of the asset; a surface decoration such as one or more of a design, a pattern, an image, a texture or other decoration that can be applied to a surface of an article according to a specification of the asset, in which case the renderer 202 can be an apparatus arranged to generate and apply such a surface decoration to the article according to the specification in the asset; a textile article such as an embroidered artefact including a design, logo, image, text or other artefact, in which case the renderer 202 can be a textile machine such as an embroidery, sewing or knitting machine arranged to a textile article as an artefact; a medicament such as a liquid or solid medicinal composition, in which case the renderer 202 can be an apparatus arranged to produce medicinal compositions such as mixtures of drugs and/or other chemicals according to volumes, proportions and/or constituents specified by the asset; an arrangement of software components to provide a software application or service, in which case the renderer 202 can be a hardware, software, firmware or combination component for aggregating, assembling, obtaining and/or instantiating the software application or service; or a machine learning algorithm having data structures and functionality including a representation, either literally or through mathematical equivalence such as a linear algebra representation, of a plurality of layers of processing, selection or switching units such as neurons being interconnected by weighted interconnections, where a configuration of the arrangement of such units, weightings of interconnections and/or a configuration of layers is specified by the asset, in which case the renderer 202 can be a hardware, software, firmware or combination component for generating an instance of a machine learning algorithm according to the specification in the asset and/or instantiating such a machine learning algorithm.

Figure 2 further includes an asset library 204 as a data storage mechanism configured to store one or more digital assets 214 being deposited by the digital asset generator 280 and, where appropriate, accessed by the renderer 202. The asset library 214 can be a centralised data storage arrangement such as a centralised database, data store or the like. Alternatively, in some embodiments, the asset library 214 is a decentralised data storage arrangement such as an "InterPlanetary File System" (IPFS) as is known to those skilled in the art and is described in detail on the internet at ipfs.io. In use, the asset library 204 permits storage and retrieval of a digital asset on the basis of verifications and authorisations as detailed below, so as to provide strict access control for the digital asset.

The arrangement of Figure 2 further includes a blockchain database 206 as a sequential transactional database that may be distributed and is communicatively connected to the network 200. Furthermore, the arrangement of Figure 2 includes a plurality of miner computing components 212a, 212b, 212c. Distributed sequential transactional databases are well known in the field of cryptocurrencies and are documented, for example, in "Mastering Bitcoin. Unlocking Digital Crypto-Currencies." (Andreas M. Antonopoulos, O'Reilly Media, April 2014). For convenience, such a database is herein referred to as a blockchain 206 though it will be appreciated that other suitable databases, data structures or mechanisms possessing the characteristics essential for embodiments of the present invention could alternatively be used. The blockchain 206 is a distributed chain of block data structures accessed by a network of nodes, referred to here as a network of miners 212. Each block in the blockchain 206 includes a plurality of transaction data structures. For example, in a preferred embodiment each blockchain includes a Merkle tree of hash or digest values for transactions included in the block to arrive at a hash value for the block, which is itself combined with a hash value for a preceding block to generate a chain of blocks (blockchain). A new block of transactions is added to the blockchain by miner 212 software, hardware, firmware or combination systems in the miner network. The miners 212 are communicatively connected to sources of transactions (such as the consumer 202) and access or copy the blockchain 206. A miner 212 undertakes validation of the substantive content of a transaction (such as the criteria defined therein) and adds a block of new transactions to the blockchain when a challenge is satisfied, typically such challenge involving a combination hash or digest for a prospective new block and a preceding block in the blockchain and some challenge criterion. Thus miners 212 in the miner network may each generate prospective new blocks for addition to the blockchain 206. Where a miner 212 satisfies or solves the challenge and validates the transactions in a prospective new block such new block is added to the blockchain 206. Accordingly, the blockchain 206 provides a distributed mechanism for reliably verifying a data entity such as information relating to a digital asset and a renderer's authorisation to access the digital asset.

While the detailed operation of blockchains and the function of miners 212 in the miner network is beyond the scope of this specification, the manner in which the blockchain 206 and network of miners 212 operate ensures that only valid transactions are added within blocks to the blockchain 206 in a manner that is persistent within the blockchain 206. Transactions added erroneously or maliciously are not verifiable by other miners 212 in the network and do not persist in the blockchain. This attribute of blockchains is exploited by embodiments of the present invention to provide a distributed and reliable assurance for the digital asset generator 280 and the asset library 204 to control access to digital assets. Thus, transactions submitted for recording in the blockchain 206 are passed to the miner network for validation by miners 212 as prospective new blocks. Validated blocks are added to the blockchain 206 by the miner network. Blocks added to the blockchain 206 that are invalid (due to error or malice) do not persist in the blockchain in favour or blocks verifiable by other miners in the network. Thus, after a period of time (the length of which can be tailored by, for example, adapting the complexity of the challenge required to demonstrate proof of work by the miners 212 as part of the creation of new blocks), a new block is confirmed in the blockchain 206 at which time entities utilising the blockchain 206 can operate with certainty that transactions in the confirmed block are valid and verifiable.

For example, one blockchain-based environment suitable for the implementation of embodiments of the present invention is the Ethereum environment. The paper "Ethereum: A Secure Decentralised Generalised Transaction Ledger" (Wood, Ethereum, 2014) (hereinafter Ethereum) provides a formal definition of a generalised transaction based state machine using a blockchain as a decentralised value-transfer system. In an Ethereum embodiment transactions can constitute digital contracts having, for example, executable code for validating and/or effecting contract conditions, terms or other requirements.

In one embodiment the arrangement of Figure 2 is implemented within one or a number of closely coupled computer systems and the network 200 is provided as a communication means between the various components of Figure 2 such as a communications bus or the like. In some embodiments the arrangement of Figure 2 is implemented in a controlled environment (for example a non-public environment) such that the blockchain is accessible to the other components that also execute in the controlled environment. For example, the arrangement could be implemented within a single organisation or a group of collaborating organisations using an intranet of the organisation(s).

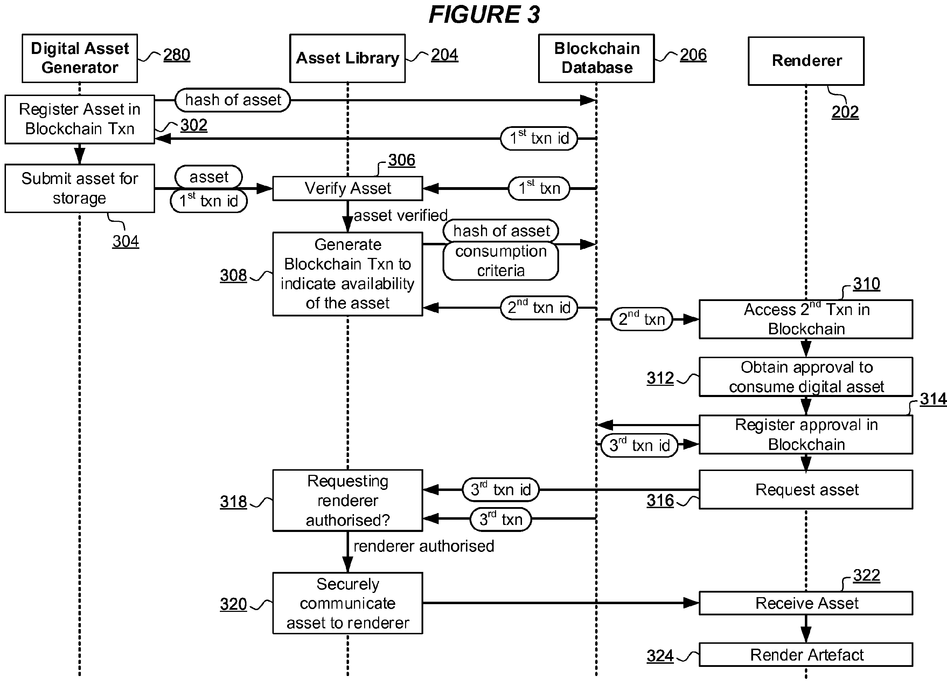

The arrangement of Figure 2 is configured to control access by renderer 202 (as one of potentially multiple renderers) to digital assets stored in the asset library 204. Figure 3 is a flow diagram illustrating a computer implemented method of controlling access to a digital asset according to embodiments of the present invention. Initially, at step 302, the digital asset generator 280 registers a digital asset in the blockchain 206 by generating a new blockchain transaction (herein referred to as the first transaction) including a hash of the digital asset. Such a hash is a data item such as a numerical value of predetermined size (such as length) that can be obtained by any suitable hashing algorithm processing the digital asset to arrive at the hash. The first transaction is thus committed to the blockchain 206 by blockchain miners 212, and an identifier of the first transaction such as a reference, identity, transaction number or transaction receipt is received by the digital asset generator 280. For example, in one embodiment, a timestamp proof of the first transaction can be provided such a Chainpoint proof as is known in the art and described in detail at chainpoint.org.

In some embodiments the first transaction includes information regarding the digital asset in addition to its hash value. For example, the first transaction can indicate a limit to a number of times artefacts according the a specification in the asset can be rendered, conditions or criteria that must be satisfied by renderers in order to permit rendering of the artefact thereby, a security standard or minimum standard that must be applied in storing and/or communicating the digital asset, and other conditions as may be imposed by, for example, the digital asset generator 280.

Subsequently, at step 304, the digital asset generator 280 submits the asset to the asset library 204 for storage thereby or therein. The digital asset is thus communicated to the asset library 204 along with the identifier of the first transaction. Preferably, the digital asset is communicated securely to the library 204 such as by being encrypted or transmitted via a securely encrypted network connection. At step 306 the asset library undertakes a verification process for verifying the digital asset received from the generator 280 by evaluating a hash value on the basis of the digital asset and comparing it with the hash stored in the first transaction in the blockchain 206. When verified, the asset library 204 stores the asset. This may be storage in a centralised data store or a decentralised data store as previously described. Preferably, the asset is stored securely by encrypting the asset or storing the asset in a secure storage facility. In one embodiment, the asset is stored using a security mechanism compliant with security conditions and/or criteria specified in the first transaction.

Subsequently, at step 308, the asset library generates a second blockchain transaction for committing to and storage by the blockchain 204. The second blockchain transaction serves to indicate, to prospective renderers, the availability of the digital asset for supply for rendering. Accordingly, the second blockchain transaction may include some indication of the nature of the digital asset. Further, the hash of the digital asset is included in the second transaction and, optionally, consumption criteria are also indicated and/or included in the second transaction. Consumption criteria can include indications of the conditions or criteria for supply and/or consumption of the digital asset indicated by the asset generator 280 and/or criteria imposed on assets or groups of assets by one or more policies, rules or other requirements of the generator 280, the library 204 or some combination of generators and libraries. For example, the consumption criteria can include a definition of a limit of a number of renders of the artefact specified by the asset that can be rendered by all, each or some subset of a group of renderers. An identifier of the second transaction in the blockchain is received by the asset library 204. In this way, digital assets including conditions for their receipt and consumption by renderers, are stored in the asset library 204.

In one embodiment, the renderer 202 is one of a plurality of renderers and the criteria for receipt and/or consumption of a digital asset for rendering by a renderer is based on one or more of: characteristics of a renderer; and characteristics of an artefact rendered by the renderer according to a specification of the asset. For example, such characteristics can include, inter alia: a security capability, security standard compliance or other security characteristic of the renderer; a volume of resource such as raw material, energy, processor, storage or other resource, required by the renderer to render the artefact; a quality of the artefact rendered by the renderer measured objectively such as by a measure of a degree of compliance, by the renderer, with the specification of the asset such as to quantify a degree to which the artefact is faithful to the specification of the asset; a speed of rendering of the artefact by the renderer; a frequency of use of the renderer to render any artefacts or any of a particular predefined subset, type, class or category of artefacts; and one or more particular rendering capabilities of the renderer, such as a resolution, standard compliance, material availability, component/part availability or other such capabilities of a renderer as will be apparent to those skilled in the art and as may depend on the nature of the artefact to be rendered. In some embodiments, where the renderer 202 is one of a plurality of renderers, a subset of the whole group of renderers as an authorised, approved or identified capable subset of rendered is determined. For example, criteria defined in the first transaction can be used to identify the subset of renderers as renderers satisfying the criteria. A determination of satisfaction of the criteria can require that renderers are required to render the artefact according to the specification in the digital asset as a preliminary measure in order to determine the satisfaction or otherwise of the renderer or the artefact with the criteria for the digital asset. Accordingly, where such a subset of the renderers is identified, an identification of the subset can be stored with or in the second transaction by the asset library 204 as a condition for supply of the digital asset to a renderer (e.g. the condition being that a renderer requesting the digital asset is in the subset renderers).

The receipt and consumption of a digital asset by the renderer 202 to render an artefact specified thereby will now be described. At step 310, the renderer 202 obtains the second transaction from the blockchain indicating the availability of the digital asset for rendering. At step 312 the renderer obtains approval to consume the digital asset. The approval process, which is not detailed here, can be external to the access control process of the presently described arrangement. For example, the approval process at step 312 can include an approval based on an expenditure of digital currency - also stored, represented or realised in or via the blockchain 206 or another blockchain data structure - as a fiat expenditure in consideration of a prospective acquisition and rendering of the digital asset. Alternatively, or additionally, the approval at step 312 can include an authentication and/or authorisation process that may take place between any or each of the generator 280, the asset library 204 and the renderer 202. In one embodiment, the approval may include one or more constraints so as to indicate a limited approval. Such constraints can include, for example: a time period during which the digital asset can be received, accessed or used; time constraints on the rendering of the artefact specified by the digital asset; volume constraints on a number of the artefacts that can be rendered; rate constraints on a rate of rendering of the artefacts; constraints on some characteristic of the artefact(s) that can be rendered such as a size, resolution, availability, onward distribution, or other aspect of the artefact or use of the digital asset; and other constraints as will be apparent to those skilled in the art and as may depend on the particular nature or type of the artefact. Notably, such approval does not replace or negate any requirement for the renderer 202 to satisfy criteria for receipt and/or consumption of the digital asset as may be recorded in the second transaction as previously described. Rather, any such approval is an additional requirement for receiving and/or consuming the digital asset.

Subsequently, at step 314, if the renderer is approved to consume the digital asset this approval is recorded by the renderer or an approving entity in the blockchain database 206 as a third transaction having a transaction identifier. For example, if the approval arises from the expenditure of cryptocurrency, then the third transaction may be generated by, or at least in part by, a beneficiary or agent of a beneficiary of such a currency transaction. Additionally, or alternatively, some indication of an approval such as a reference to a cryptocurrency transaction, an identifier or a hash of an approval data structure, can be included in the third transaction. The third transaction additionally identifies the digital asset for which approval is recorded (such as by a hash of the digital asset as may be obtained from the second transaction) and, where the approval is constrained, the constraints are also recorded in the third transaction.

At step 316 the renderer 202 requests the digital asset from the asset library 204 supplying an identifier of the third transaction. The third transaction is thus obtained by the asset library 204 at step 318 to as part of a confirmation of the authorisation of the renderer 202 to receive and consume the digital asset to render the artefact. Where the second transaction includes criteria for the consumption of the digital asset, such as criteria earlier described and stored in or with the second transaction, the asset library 204 further confirms that the renderer 202 is compliant with these criteria. This compliance check may depend on further communication with the renderer 202 or with a separate component such as an authority on the capabilities of the renderer 202. Additionally or alternatively, compliance with such criteria may be checked with reference to any renderer identification included with or in the second transaction such as a definition of a subset of renderers that may identify or include the renderer 202 as previously described. This, at step 318, authorisation and compliance of the requesting renderer 202 is checked.

Where the authorisation and compliance is confirmed, the asset library 204 securely communicates the digital asset to the renderer 202 for receipt by the renderer 202 at step 322. Subsequently, the renderer 324 is operable to render the artefact based on the specification of the digital asset at step 324.

In some embodiments, criteria for the consumption of the digital asset by the renderer 202 may require monitoring of the renderer to ensure compliance and identify occurrences of non-compliance. Such monitoring may be achieved by a further component, or a feature of an existing component such as the asset library 204, which is adapted to monitor the renderer 202 in operation to render the artefact. For example, compliance with security criteria, performance criteria, quality criteria and the like may be monitored by such a component. Such a component can be a library or other software, hardware, firmware or combination component communicatively connected to the renderer 202 in use.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of controlling access to a digital asset (214) specifying how an artefact is to be rendered, wherein the method comprises:
receiving the digital asset and an indication of a first transaction in a decentralised sequential transactional database (206);
verifying the digital asset by evaluating a digital hash of the asset to compare with a hash stored in the first transaction and, responsive to the verification, securely storing the digital asset;
generating a second transaction in the decentralised sequential transactional database to indicate to prospective renderers the availability of the digital asset for rendering the artefact;
receiving a request to access the digital asset by a requesting renderer (202), the request including an indication of a third transaction in the decentralised sequential transactional database;
accessing the third transaction and responsive to a determination that the third transaction indicates that the requesting renderer is authorised to access the digital asset for rendering the artefact, securely communicating the digital asset to the requesting renderer, the method further comprising:
receiving one or more criteria each defining criteria for receipt and/or consumption of the digital asset for rendering by a renderer and/or rendering of the artefact determined to meet a predetermined suitability;
defining a subset of a plurality of renderers satisfying the one or more criteria based on characteristics of the renderers and the one or more criteria, and
wherein the communication of the digital asset to the requesting renderer is further conditional on the requesting renderer belonging to the defined subset of renderers.

2. The method of claim 1 wherein the decentralised sequential transactional database includes a blockchain data structure accessed by mining components to collectively validate a state of the blockchain.

3. The method of claim 2 wherein the blockchain data structure is implemented using an Ethereum blockchain and each of the first, second and third transactions are Ethereum contracts.

4. The method of any preceding claim wherein the artefact is one of: a 3D-printed article; an image; a moving image such as a video; one or more sounds; a multimedia object; a surface decoration; a textile article; a foodstuff; a medicament; an arrangement of software components as an application or software service; a physical object assembled from a set of staple parts; a toy; and a particular configuration of neurons and weights between neurons in a machine learning algorithm.

5. The method of any preceding claim wherein the renderer renders the artefact to include, embedded therein or thereon, at least part of the indication of the third transaction to signify the authorisation of the renderer to render the artefact.

6. The method of any preceding claim wherein the digital asset is securely stored in a decentralised digital library.

7. The method of any preceding claim wherein the one or more criteria include security characteristics of renderers.

8. The method of claim 7 wherein the requesting renderer is further monitored continually for compliance with the security characteristics.

9. The method of any preceding claim further comprising:
triggering each of the plurality of renderers to render the artefact based on the digital asset and collecting the characteristics of each renderer and/or rendered artefact, and
wherein the subset of the plurality of renderers is defined based on the characteristics and the one or more criteria.

10. The method of claim 9 wherein the one or more criteria include performance characteristics of renderers.

11. The method of claim 10 wherein the performance characteristics include, for a renderer rendering the artefact: a volume of resource consumed by the renderer; a compliance, by the renderer, with the specification of the digital asset; a speed of rendering; a frequency of use of the renderer to render any artefacts; and a rendering capability of the renderer.

12. A computer system including a processor and memory storing computer program code for performing the steps of a method as claimed in any of claims 1 to 11.

13. A computer program element comprising computer program code to, when loaded into a computer system and executed thereon, cause the computer to perform the steps of a method as claimed in any of claims 1 to 11.

## Patentansprüche

1. Computerimplementiertes Verfahren zum Steuern des Zugriffs auf ein digitales Gut (214), das angibt, wie ein Artefakt gerendert werden soll, wobei das Verfahren Folgendes umfasst:
Empfangen des digitalen Guts und eines Hinweises auf eine erste Transaktion in einer dezentralen sequentiellen Transaktionsdatenbank (206);
Verifizieren des digitalen Guts durch Auswerten eines digitalen Hashs des Guts zum Vergleich mit einem in der ersten Transaktion gespeicherten Hash und, als Reaktion auf die Verifizierung, sichere Speicherung des digitalen Guts;
Erzeugen einer zweiten Transaktion in der dezentralisierten sequentiellen Transaktionsdatenbank, um potenziellen Renderern die Verfügbarkeit des digitalen Guts zum Rendern des Artefakts anzuzeigen;
Empfangen einer Anfrage zum Zugreifen auf das digitale Gut durch einen anfragenden Renderer (202), wobei die Anfrage einen Hinweis auf eine dritte Transaktion in der dezentralen sequentiellen Transaktionsdatenbank enthält:
Zugreifen auf die dritte Transaktion und als Reaktion auf die Feststellung, dass die dritte Transaktion anzeigt, dass der anfragende Renderer berechtigt ist, auf das digitale Gut zuzugreifen, um das Artefakt zu rendern, sicheres Übermitteln des digitalen Guts an den anfragenden Renderer, wobei das Verfahren ferner Folgendes umfasst:
Empfangen von einem oder mehreren Kriterien, die jeweils Kriterien für den Empfang und/oder den Verbrauch des digitalen Guts zum Rendern durch einen Renderer und/oder das Rendern des Artefakts definieren, für das bestimmt wurde, dass es eine vorbestimmte Eignung erfüllt;
Definieren einer Teilmenge einer Vielzahl von Renderern, die das eine oder die mehreren Kriterien erfüllen, basierend auf den Eigenschaften der Renderer und dem einen oder den mehreren Kriterien, und
wobei die Übermittlung des digitalen Guts an den anfragenden Renderer ferner davon abhängt, ob der anfragende Renderer zu der definierten Teilmenge von Renderern gehört.

2. Verfahren nach Anspruch 1, wobei die dezentrale sequentielle Transaktionsdatenbank eine Blockchain-Datenstruktur enthält, auf die von Mining-Komponenten zugegriffen wird, um gemeinsam einen Zustand der Blockchain zu validieren.

3. Verfahren nach Anspruch 2, wobei die Blockchain-Datenstruktur unter Verwendung einer Ethereum-Blockchain implementiert ist und jede der ersten, zweiten und dritten Transaktionen ein Ethereum-Vertrag ist.

4. Verfahren nach einem der vorhergehenden Ansprüche, wobei das Artefakt eines der folgenden ist:
ein 3D-Druckartikel;
ein Bild;
ein bewegtes Bild, z. B. ein Video;
ein oder mehrere Töne;
ein Multimedia-Objekt;
eine Oberflächenverzierung;
ein Textilerzeugnis;
ein Lebensmittel, ein Arzneimittel;
eine Anordnung von Softwarekomponenten als Anwendung oder Softwaredienst;
ein physisches Objekt, das aus einem Satz von Armaturenteilen zusammengesetzt ist;
ein Spielzeug; und
eine bestimmte Konfiguration von Neuronen und Gewichten zwischen Neuronen in einem Machine-Learning-Algorithmus.

5. Verfahren nach einem der vorhergehenden Ansprüche, wobei der Renderer das Artefakt so rendert, dass zumindest ein Teil der Angabe der dritten Transaktion darin oder darauf eingebettet ist, um die Autorisierung des Renderers zum Rendern des Artefakts zu kennzeichnen.

6. Verfahren nach einem der vorhergehenden Ansprüche, wobei das digitale Gut sicher in einer dezentralisierten digitalen Bibliothek gespeichert wird.

7. Verfahren nach einem der vorhergehenden Ansprüche, wobei das eine oder die mehreren Kriterien Sicherheitsmerkmale von Renderern einschließen.

8. Verfahren nach Anspruch 7, wobei der anfragende Renderer ferner kontinuierlich auf Konformität mit den Sicherheitsmerkmalen überwacht wird.

9. Verfahren nach einem beliebigen vorhergehenden Anspruch, das ferner Folgendes umfasst:
Auslösen jedes der Vielzahl von Renderern zum Rendern des Artefakts auf der Grundlage des digitalen Guts und Sammeln der Merkmale jedes Renderers und/oder des gerenderten Artefakts, und
wobei die Teilmenge der Vielzahl von Renderern auf der Grundlage der Merkmale und des einen oder der mehreren Kriterien definiert wird.

10. Verfahren nach Anspruch 9, wobei das eine oder die mehreren Kriterien Leistungsmerkmale von Renderern umfassen.

11. Verfahren nach Anspruch 10, wobei die Leistungsmerkmale für einen Renderer, der das Artefakt rendert, Folgendes beinhalten:
ein vom Renderer verbrauchtes Ressourcenvolumen;
eine Konformität des Renderers mit der Spezifikation des digitalen Guts;
eine Rendering-Geschwindigkeit;
eine Häufigkeit der Verwendung des Renderers zum Rendern von Artefakten; und
eine Rendering-Fähigkeit des Renderers.

12. Computersystem mit einem Prozessor und einem Speicher, der Computerprogrammcode zur Durchführung der Schritte eines Verfahrens nach einem der Ansprüche 1 bis 11 speichert.

13. Computerprogrammelement, das einen Computerprogrammcode umfasst, der, wenn er in ein Computersystem geladen und darauf ausgeführt wird, den Computer veranlasst, die Schritte eines Verfahrens nach einem der Ansprüche 1 bis 11 durchzuführen.

## Revendications

1. Procédé mis en œuvre par ordinateur de commande d'accès à un actif numérique (214) spécifiant comment réaliser le rendu d'un artefact, dans lequel le procédé comprend :
la réception de l'actif numérique et d'une indication d'une première transaction dans une base de données transactionnelle séquentielle décentralisée (206) ;
la vérification de l'actif numérique en évaluant une empreinte numérique de l'actif pour sa comparaison avec une empreinte stockée dans la première transaction et, en réponse à la vérification, le stockage de façon sécurisée de l'actif numérique ;
la génération d'une deuxième transaction dans la base de données transactionnelle séquentielle décentralisée pour indiquer à des moteurs de rendu prospectifs la disponibilité de l'actif numérique pour réaliser le rendu de l'artefact ;
la réception d'une demande pour accéder à l'actif numérique par un moteur de rendu demandeur (202), la demande incluant une indication d'une troisième transaction dans la base de données transactionnelle séquentielle décentralisée ;
l'accès à la troisième transaction et en réponse à une détermination du fait que la troisième transaction indique que le moteur de rendu demandeur est autorisé à accéder à l'actif numérique pour réaliser le rendu de l'artefact, la communication de façon sécurisée de l'actif numérique au moteur de rendu demandeur,
le procédé comprenant en outre :
la réception d'un ou de plusieurs critères dont chacun définit un critère pour la réception et/ou la consommation de l'actif numérique pour réaliser le rendu au moyen d'un moteur de rendu et/ou pour réaliser le rendu de l'artefact déterminé comme satisfaisant un caractère approprié prédéterminé ;
la définition d'un sous-ensemble d'une pluralité de moteurs de rendu satisfaisant les un ou plusieurs critères sur la base de caractéristiques des moteurs de rendu et des un ou plusieurs critères, et
dans lequel la communication de l'actif numérique au moteur de rendu demandeur est en outre conditionnée sur le fait que le moteur de rendu demandeur appartient au sous-ensemble défini de moteurs de rendu.

2. Procédé selon la revendication 1, dans lequel la base de données transactionnelle séquentielle décentralisée inclut une structure de données de blockchain accédée en mimant des composant(e)s pour valider collectivement un état de la blockchain.

3. Procédé selon la revendication 2, dans lequel la structure de données de blockchain est mise en œuvre en utilisant une blockchain Ethereum et chacune des première, deuxième et troisième transactions est un contrat Ethereum.

4. Procédé selon l'une quelconque des revendications précédentes, dans lequel l'artefact est l'un de : un article imprimé en 3D ; une image ; une image mobile telle qu'une vidéo ; un ou plusieurs sons ; un objet multimédia ; une décoration de surface ; un article textile ; un produit alimentaire ; un médicament ; un agencement de composants de logiciel en tant que service d'application(s) ou de logiciel(s) ; un objet physique assemblé à partir d'un ensemble de parties de base ; un jouet ; et une configuration particulière de neurones et de poids entre les neurones dans un algorithme d'apprentissage automatique.

5. Procédé selon l'une quelconque des revendications précédentes, dans lequel le moteur de rendu réalise le rendu de l'artefact de telle sorte qu'il inclue, intégrée en son sein ou sur lui, au moins une partie de l'indication de la troisième transaction pour signifier l'autorisation du moteur de rendu à réaliser le rendu de l'artefact.

6. Procédé selon l'une quelconque des revendications précédentes, dans lequel l'actif numérique est stocké de façon sécurisée dans une bibliothèque numérique décentralisée.

7. Procédé selon l'une quelconque des revendications précédentes, dans lequel les un ou plusieurs critères incluent des caractéristiques de sécurité de moteurs de rendu.

8. Procédé selon la revendication 7, dans lequel le moteur de rendu demandeur est en outre surveillé en continu quant à sa conformité par rapport aux caractéristiques de sécurité.

9. Procédé selon l'une quelconque des revendications précédentes, comprenant en outre :
le déclenchement de chacun de la pluralité de moteurs de rendu pour réaliser le rendu de l'artefact sur la base de l'actif numérique et la collecte des caractéristiques de chaque moteur de rendu et/ou de chaque artefact dont le rendu est réalisé, et
dans lequel le sous-ensemble de la pluralité de moteurs de rendu est défini sur la base des caractéristiques et des un ou plusieurs critères.

10. Procédé selon la revendication 9, dans lequel les un ou plusieurs critères incluent des caractéristiques de performance de moteurs de rendu.

11. Procédé selon la revendication 10, dans lequel les caractéristiques de performance incluent, pour un moteur de rendu qui réalise le rendu de l'artefact : un volume de ressource consommée par le moteur de rendu ; une conformité, du moteur de rendu, par rapport à la spécification de l'actif numérique ; une vitesse de réalisation de rendu ; une fréquence d'utilisation du moteur de rendu pour réaliser le rendu de quelconques artefacts ; et une capacité de rendu du moteur de rendu.

12. Système informatique incluant un processeur et une mémoire stockant un code de programme informatique pour réaliser les étapes d'un procédé tel que revendiqué selon l'une quelconque des revendications 1 à 11.

13. Élément de programme informatique comprenant un code de programme informatique pour, lorsqu'il est chargé à l'intérieur d'un système informatique et qu'il est exécuté dessus, forcer l'ordinateur à réaliser les étapes d'un procédé tel que revendiqué selon l'une quelconque des revendications 1 à 11.
